(19) 
**Europäisches Patentamt**
**European Patent Office**
**Office européen des brevets**

(11) **EP 3 073 349 B1**

(12) **EUROPEAN PATENT SPECIFICATION**

(45) Date of publication and mention
of the grant of the patent:
**02.01.2019 Bulletin 2019/01**

(51) Int Cl.:
**G06F 1/12** *(2006.01)* **G06F 1/08** *(2006.01)*
**G06F 1/32** *(2006.01)*

(21) Application number: **15196622.3**

(22) Date of filing: **26.11.2015**

(54) **SYSTEM AND METHOD FOR DYNAMICALLY ADJUSTING HOST LOW POWER CLOCK FREQUENCY**

SYSTEM UND VERFAHREN ZUM DYNAMISCHEN EINSTELLEN VON NIEDRIGER HOST-LEISTUNGS-TAKTFREQUENZ

SYSTÈME ET PROCÉDÉ DESTINÉS À RÉGLER DYNAMIQUEMENT LA FRÉQUENCE D'HORLOGE HÔTE À FAIBLE PUISSANCE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.03.2015 IN 1503CH2015**
**29.06.2015 US 201514754475**

(43) Date of publication of application:
**28.09.2016 Bulletin 2016/39**

(73) Proprietor: **Wipro Limited**
**560 035 Karnataka (IN)**

(72) Inventor: **Kodavalla, Vijay Kumar**
**560043 Karnataka (IN)**

(74) Representative: **Finnegan Europe LLP**
**1 London Bridge**
**London SE1 9BG (GB)**

(56) References cited:
**US-A1- 2010 169 699**

- **MIPI ALLIANCE ED - MIPI ALLIANCE: "MIPI Alliance Standard for Display Serial Interface V1.0", INTERNET CITATION, 5 April 2011 (2011-04-05), pages 1-82, XP002677191, Retrieved from the Internet: URL:http://wenku.baidu.com/view/0876b95377 232f60ddcca124.html?from=rec&pos=2&weight = 138&lastweight=115&count=5 [retrieved on 2012-06-01]**

**Description**

Technical Field

This disclosure relates generally to a host-peripheral interface, and more particularly to a system and method for dynamically adjusting a low power clock frequency of a host device upon detecting coupling of a peripheral device to the host device.

Background

A communication interface enables data transmission between two or more electronic devices including host and peripheral devices. For example, mobile industry processor interface (MIPI) is a widely adopted communication interface standard between a host device and a peripheral device, and is prevalent in products such as mobile electronic devices, digital cameras, display devices, modems, RFIC (radio frequency integrated circuit), portable tablets and laptop computers. MIPI is a standardized interconnect protocol between a host and one or more peripherals and is based on a very high-speed serial interface, optimized for power. There are several higher layer standards in MIPI such as a display serial interface (DSI), a camera serial interface (CSI), an interface between a radio frequency transceiver integrated circuit and a baseband integrated circuit (DigRF) and a low latency interface (LLI), and so forth along with physical layer specifications such as D-PHY and M-PHY.

The D-PHY specification provides a high-speed serial interface solution for communications between various components in an electronic device. The D-PHY solution is capable of expanding a bandwidth of a transmission interface through a low-power consumption approach. For data transmission, the MIPI D-PHY specification defines two modes a high-speed mode (< 1Gbps) and a low-power mode (< 10Mbps). The high-speed mode is used for high-speed data traffic and the low power mode is used for transferring control information. In the high-speed mode, there is a source synchronous clock on a separate lane between the host and peripherals. In contrast, the low power mode is achieved through a bidirectional data lane between the host and peripherals and the clock is expected to be extracted from the bidirectional data lane. Moreover, the low power clock frequency of the host is to be manually adjusted within a certain range (typically, 67% to 150%) of the low power clock frequency of a peripheral connected to the host based on the knowledge of the peripheral low power clock frequency published or specified by the manufacturer of the peripheral.

However, any variations between a peripheral's published low power clock frequency and its actual low power clock frequency due to component tolerances may lead to a low power link failure between a host and the peripheral. Similarly, any variations in the adjusted host low power clock frequency due to clock adjustment circuitry precision may lead to low power link failure between the host and the peripheral if the adjusted host clock frequency crosses the allowed range around the actual low power clock frequency of the peripheral. The low power link failure between a host and a peripheral is catastrophic, as the peripheral will become unusable. Moreover, the static adjustment of the host low power clock frequency for a given peripheral or a set of peripherals may not be suitable for another peripheral.

MIPI Alliance Standard for Display Serial Interface Version 1.00a - 19 April 2006 discloses the Display Serial Interface (DSI) specification defining protocols between a host processor and peripheral devices that adhere to MIPI Alliance specifications for mobile device interfaces. The DSI specification builds on existing standards by adopting pixel formats and command set defined in MIPI Alliance standards for DBI-2, DPI-2, and DCS.

US 2010/0169699 discloses a memory card including a memory controller configured to perform control for sending and receiving a command signal, a response signal, a data signal, and a status signal in synchronization with a clock signal, and a memory-side pattern signal storage unit configured to store a tuning pattern signal to be sent to a host device. The tuning pattern signal is used by the host device to adjust the phase of the clock signal for use as a sampling clock signal. The memory card sends a first tuning pattern signal through a command line and a second tuning pattern signal through a data line concurrently.

**SUMMARY**

The independent claims define methods for dynamically adjusting a low power clock frequency of a host device; a system for dynamically adjusting a low power clock frequency of a host device utilizing the methods; and a non-transitory computer-readable medium storing processor-executable instructions for executing the methods.

Further aspects of the invention are outlined in the dependent claims. Embodiments which do not fall within the scope of the claims do not form part of the present invention.

It is to be understood that both the foregoing general description and the following detailed description are exemplary and explanatory only and are not restrictive of the invention, as claimed.

## BRIEF DESCRIPTION OF THE DRAWINGS

The accompanying drawings, which are incorporated in and constitute a part of this disclosure, illustrate exemplary embodiments and, together with the description, serve to explain the disclosed principles.

FIG. 1 illustrates a typical mobile industry processor interface (MIPI) system for adjusting a low power clock frequency of a MIPI host device.

FIG. 2 illustrates a typical clock controller of the MIPI host device.

FIG. 3 is a functional block diagram of a typical clock parameter compute module of the MIPI host device.

FIG. 4 illustrates a typical DSI/CSI host controller control-data path by way of an example.

FIG. 5 illustrates an exemplary system in which a low power clock frequency of a host device is automatically and dynamically adjusted according to some embodiments of the present disclosure.

FIG. 6 is a functional block diagram of an exemplary clock parameter compute module of the host device according to some embodiments of the present disclosure.

FIG. 7 illustrates an exemplary DSI/CSI host controller control-data path according to some embodiments of the present disclosure.

FIG. 8 is a functional block diagram of an exemplary low power adjust module of the host device according to some embodiments of the present disclosure.

FIG. 9 is a flow diagram of an exemplary process for dynamically adjusting a host low power clock frequency in accordance with some embodiments of the present disclosure.

FIG. 10 is a flow diagram of an exemplary process for determining a host low power clock frequency range in which a host-peripheral low power link is operational in accordance with some embodiments of the present disclosure.

FIG. 11 is a flow diagram of a detailed exemplary process of FIG. 9 using process of FIG. 10 in accordance with some embodiments of the present disclosure.

FIG. 12 is a flow diagram of a detailed exemplary process for determining the host low power clock frequency range of FIG. 11 in accordance with some embodiments of the present disclosure.

FIG. 13 is a flow diagram of a detailed exemplary process for assessing the host-peripheral low power link in the host low power clock frequency range of FIG. 11 in accordance with some embodiments of the present disclosure.

FIG. 14 is a flow diagram of another exemplary process for determining a host low power clock frequency range in which a host-peripheral low power link is operational in accordance with some embodiments of the present disclosure.

FIG. 15 is a flow diagram of a detailed exemplary process of FIG. 9 using process of FIG. 14 in accordance with some embodiments of the present disclosure.

FIG. 16 is a block diagram of an exemplary computer system for implementing embodiments consistent with the present disclosure.

## DETAILED DESCRIPTION

Exemplary embodiments are described with reference to the accompanying drawings. Wherever convenient, the same reference numbers are used throughout the drawings to refer to the same or like parts. While examples and features of disclosed principles are described herein, modifications, adaptations, and other implementations are possible without departing from the scope of the disclosed embodiments. It is intended that the following detailed description be considered as exemplary only, with the true scope being indicated by the following claims.

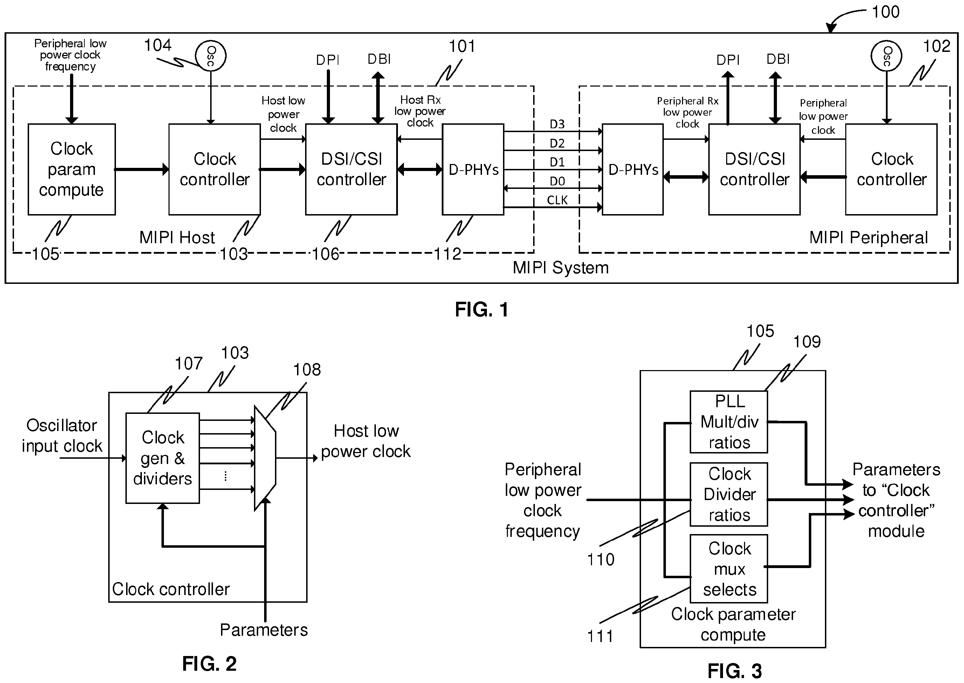

Referring now to FIG. 1, a typical mobile industry processor interface (MIPI) system 100 is illustrated. The MIPI system comprises a MIPI host device 101 and a MIPI peripheral device 102. A number of data lanes or data links D0-D3 between the host 101 and the peripheral 102 along with a clock lane enable transmission of data between the host 101 and the peripheral 102. It should be noted that the data lane DO is a bidirectional lane, which is used for low power data transmission.

A clock controller 103 receives input from an oscillator clock (Osc) 104 and parameters from clock parameter compute module 105 and generates a host low power clock. Further, it should be noted that the clock controller 103 may generate or control other clocks such as a display bus interface (DBI) clock, a display pixel interface (DPI) clock, and so forth. The clock controller 103 subsequently outputs the host low power clock apart from other clocks to a DSI/CSI controller 106. As stated above, the DSI/CSI are MIPI higher layer standards for display and camera interfaces respectively.

A typical host clock controller 103 module is illustrated in FIG. 2. The clock controller 103 typically comprises phase locked loops (PLLs) within a series of clock generator and dividers 107 for deriving multiple clocks of varying frequencies based on the oscillator input clock 104 and parameters from the clock parameter compute module 105. The clock controller 103 further comprises a clock multiplexer 108 for selecting one among many clocks available at the output of the clock generator and dividers 107. The input parameters from the clock parameter compute module 105 also configure the clock multiplexer 108.

In operation, the MIPI host 101 initiates low power writes using host low power clock on to the DO data lane. However, as discussed above, the MIPI host 101 has to adjust its low power clock frequency to within a certain specified range of the peripheral low power clock frequency before performing any data transmission. As will be appreciated by those skilled in the art, the MIPI host 101 is required to adjust its low power clock frequency whenever there is an addition or a change in the peripheral device 102. It should be noted that the MIPI host 101 has flexibility to set its low power clock frequency to any value within the predetermined range. For example, in a DSI/CSI/D-PHY MIPI system, the host 101 has to adjust its low power clock frequency to within the range of 67% to 150% of the peripheral low power clock frequency.

As discussed above, a peripheral manufacturer typically specifies a low power clock frequency employed by the peripheral device 102. The host device has to adjust its low power clock frequency depending on the low power clock frequency of the peripheral as specified. This is achieved by using the clock parameter compute module 105. This module receives the peripheral low power clock frequency and adjusts the parameters that are fed to the clock controller 103 such that the host low power clock frequency is within the specified range of the peripheral low power clock frequency. The typical parameters include clock multiplication factors, division factors and clock multiplexer select lines.

A functional block diagram of a typical clock parameter compute module 105 of the host device 101 is illustrated in FIG. 3. The clock parameter compute module 105 manually receives the peripheral low power clock frequency and computes various parameters employed by the clock controller module 103. The parameters include PLL multiplication and division factors 109 needed for achieving the set frequency of the host low power clock. The clock parameter compute module 105 also computes clock divider ratios 110 and clock multiplexer selects 111 employed by the clock controller module 103 for achieving the set frequency of the host low power clock. Therefore, as discussed above, adjustment of the host low power clock frequency in the existing MIPI systems is dependent on the low power clock frequency of the peripheral it is connected to.

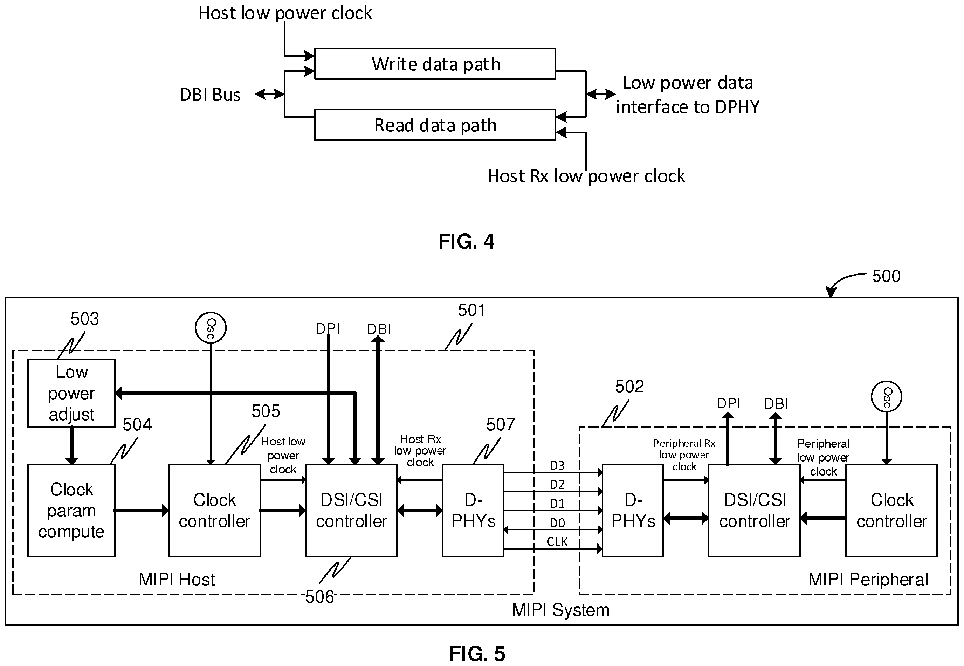

Further, the D-PHY 112 generates a receive (Rx) low power clock by an EX-OR logic gate of the DO data differential lanes in the low power mode and sends it to a DSI/CSI controller 106, as part of the PHY protocol interface (PPI), separately in both the host (Host Rx low power clock) and the peripherals (Peripheral Rx low power clock). The host 101 writes control-data in the host low power clock domain, whereas it reads control-data in the host Rx low power clock domain. Similarly, the peripheral 102 reads control-data in the peripheral Rx low power clock domain and writes control-data in the peripheral low power clock domain. Thus, in certain cases, the low power clock frequency of the host 101 and peripheral 102 devices need not be the same but may actually differ. However, the ratio between the low power clock frequency of the host 101 and the peripheral 102 may be constrained to ensure proper bus turn around (BTA) behavior. The DSI/CSI controller 106 sends or receives high-speed video data from a video source on a DPI interface. Similarly, the DSI/CSI controller 106 sends or receives low power control-data on a DBI interface. Further, the MIPI host 101 can read from the MIPI peripheral 102 through the same bidirectional lane D0. FIG. 4 illustrates an exemplary DSI/CSI host controller control-data path between the DBI and the DO data lane.

As stated above, the current MIPI standard necessitates adjustment of the low power host clock frequency to a predetermined range that is within the allowable range of the peripheral. For this purpose, a peripheral manufacturer publishes the low power clock frequency of the peripheral. However, variations between the peripheral's published low power clock frequency and actual low power clock frequency, due to component tolerances and variations in adjusted host low power clock frequency due to clock adjustment circuitry precision, may lead to a low power link failure between the host and the peripheral, if the adjusted host clock frequency crosses the allowed range around the actual low power clock frequency of the peripheral. The low power link failure between the host and the peripheral is catastrophic, as the peripheral will become unusable. Moreover, the static adjustment of the host clock frequency (HCF) for a given peripheral or a set of peripherals may not be suitable for another peripheral.

It is therefore desirable to provide a system and method for dynamic adjustment of a low power clock frequency of a host device without depending on an individual peripheral's low power clock frequency, whenever there is a new peripheral coupled to the host device or whenever there is a change in the connected peripherals.

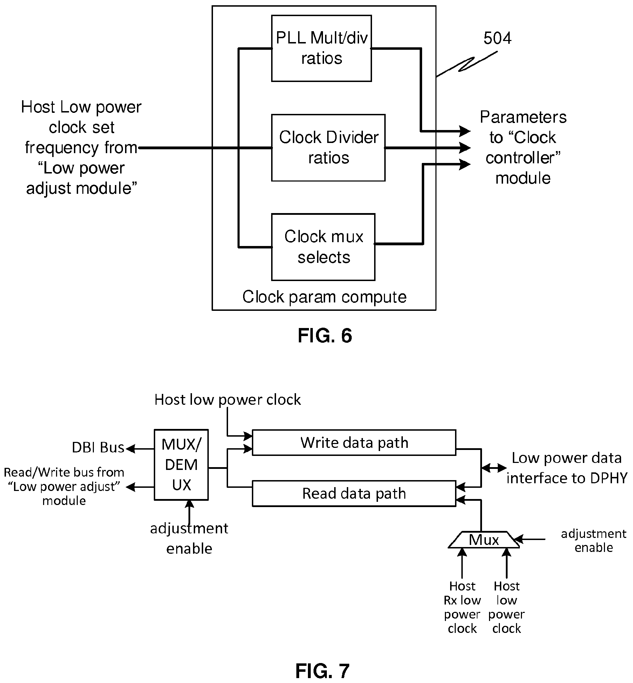

Referring now to FIG. 5, an exemplary system 500 in which a low power clock frequency of a host device is automatically and dynamically adjusted is illustrated according to some embodiments of the present disclosure. The system 500 comprises a host 501 and at least one peripheral 502. In certain embodiments, the system 500 is a computing or a mobile device comprising a MIPI circuitry. The MIPI circuitry comprises a MIPI host and at least one MIPI peripheral. In comparison to the existing system 100 discussed above, the host device 501 of the disclosed system 500 comprises a low power adjust module 503. The low power adjust module 503 will be described in greater detail hereinbelow. The clock parameter compute module 504 in the MIPI host 501 receives a host low power clock set frequency from a low power adjust module 503 and adjusts the parameters to the clock controller 505. A functional block diagram of the clock parameter compute module in the system 500 is shown in FIG. 6. As will be appreciated by those skilled in the art, the input to the clock parameter compute module 504 is the host low power clock set frequency from the low power adjust module 503, whereas in the existing system it is the peripheral low power clock frequency.

Referring now to FIG. 7, an exemplary DSI/CSI host controller control-data path is illustrated according to some embodiments of the present disclosure. As will be appreciated by those skilled in the art, there is a difference in the way control-data is handled by the DSI/CSI Host controller 506 of the system 500 as compared to that in existing system discussed above. As illustrated, the host writes control-data in the host low power clock domain, whereas it reads control-data in the host low power clock domain, while automatically adjusting it ('adjustment enable' is set) and the host Rx low power clock domain, after adjusting ('adjustment enable' is reset) the host low power clock frequency. The 'adjustment enable' signal is driven from the low power adjust module 503. This signal will be set when the host low power clock frequency is being adjusted and will be reset after adjustment is over. Another difference with respect to the existing system is that read/write control-data may be driven by the low power adjust module 503 while adjustment is taking place. However, once the adjustment is over, the DBI bus will be driving the read/write control data. The selection is again through the 'adjustment enable' signal.

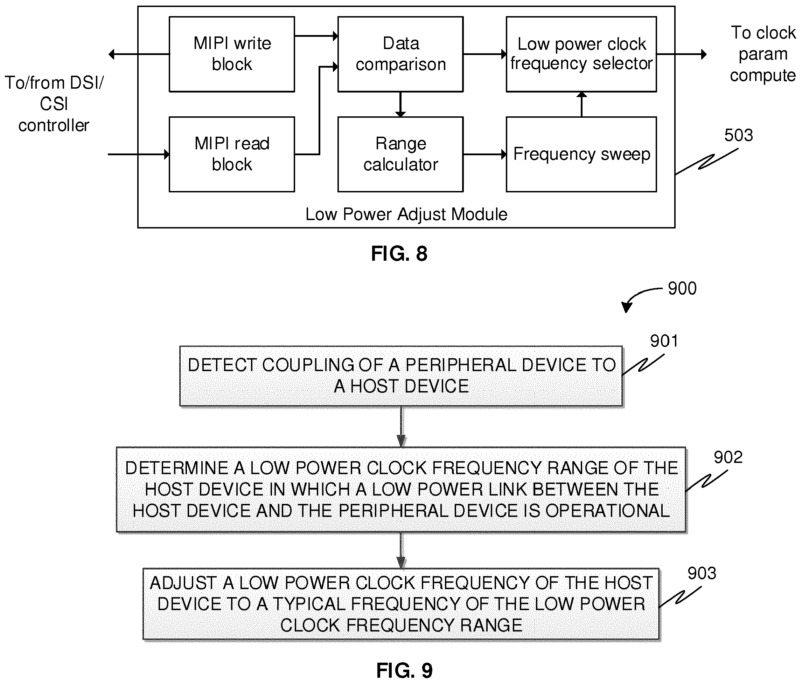

FIG. 8 illustrates a functional block diagram of an exemplary low power adjust module 503 of the host device 501 according to some embodiments of the present disclosure. The low power adjust module 503 sweeps the host low power clock frequency, and performs writes and reads on to the MIPI peripheral 502 through the DSI/CSI controller 506 and D-PHYs 507. Further, the low power adjust module 503 automatically determines a valid host low power frequency range in which the low power data link D0 works during auto sweep and allocates a valid frequency to the host low power clock. Additionally, the low power adjust module 503 interfaces to the DSI/CSI controller 506 for performing writes and reads onto the MIPI peripheral 502. Moreover, the low power adjust module 503 compares write and read data to check data parity, sweeps the low power clock frequency, calculates its range, and selects and sends a selected low power clock frequency to the clock parameter compute module 504.

In other words, the low power adjust module 503 dynamically determines a low power clock frequency range of the host in which the low power link between the host and the peripheral is operational upon detecting a new peripheral or a change in the peripheral. The low power adjust module 503 subsequently adjusts a host low power clock frequency to a typical frequency of the host low power clock frequency range. As will be appreciated, the adjustment of the host low power clock frequency is without depending on the peripheral low power clock frequency. The low power adjust module 503 may determine the host low power clock frequency range of the host in which the low power link between the host and the peripheral is operational in a variety of ways.

For example, in certain embodiments, the low power adjust module may dynamically determine an initial frequency of a host low power clock at which the low power link is operational, compute the host low power clock frequency range based on the initial frequency so determined, and assess whether the low power link is operational in the computed host low power clock frequency range. Alternatively, in certain embodiments, the low power adjust module may sweep multiple frequencies of the host low power clock, assess whether the low power link is operational at each of the multiple frequencies, and determine the host low power clock frequency range based on the assessment.

The low power adjust module 503 performs one or more of following primary functions: (1) sweeping the host low power clock frequency and determining a valid host low power clock frequency range, (2) assessing the low power link in the determined host low power clock frequency range i.e., checking whether the host-peripheral links works in the determined host low power clock frequency range, and (3) allocating a valid frequency to the host low power clock. Each of these functions will now be described in greater detail hereinbelow.

By way of an example, in the first function, the low power adjust module 503 automatically sweeps the host low power clock frequency and dynamically determines a valid host low power clock frequency range. To start with, in the sweeping step, the low power adjust module 503 sets the host low power clock frequency at a highest predefined value; say, 20MHz. In subsequent iterations, instead of the set highest value of the host low power clock frequency, an updated lower value back from respective steps is used. Alternatively, it should be noted that the low power adjust module 503 may set the host low power clock frequency at a lowest predefined value at the start and in subsequent iterations an updated higher value from respective steps may be used.

In the determining step, the low power adjust module 503 assesses the low power link at the set or updated frequency by checking whether the host-peripheral low power link works with the given setting of the host low power clock frequency. This check involves the following steps: initiating a write command from the host device to write data on at least one register of the peripheral device, initiating a read command by the host device to read data from the at least one register of the peripheral device, and comparing the read data with the write data for a data parity.

The low power adjust module 503 initiates write into some or all of the peripheral registers using commands like generic long write or display command set (DCS) write. The write data used may be predetermined such as incremental data patterns. The low power adjust module 503 then initiates read into the same peripheral registers where writes were initiated using commands like generic long read or DCS read. These write and read commands may be initiated by the low power adjust module 503 through the CSI/DSI controller 506 and the D-PHYs 507 on the host device 501. The host device 501 then turns around the bus and waits for the requested read data from the peripheral device 502. If read data is received from the peripheral, it will be latched and compared with the predetermined write data patterns used. If the data matches i.e. if there is data parity, it is determined that host-peripheral link is working with the set host low power clock frequency. The comparison and decision is taken in the low power adjust module 503. However, if read data is not received or if read data does not match with write data, the host 501 times out the bus turnaround time and determines that host-peripheral link has failed. In the case that the link is determined as failed, this function rolls back to the sweeping step and the low power adjust module 503 updates the host low power clock frequency to a lower value or a higher value than previously set. The determining step is then repeated and this process continues until the host-peripheral link works.

The first frequency at which the low power link is operational provides the initial frequency of the host low power clock. The host low power clock frequency range may then be determined by continuing with the above iterative process until the host-peripheral link is working. The last frequency at which the low power link is operational provides the final frequency of the host low power clock. The initial and the final frequencies provide the host low power clock frequency range. As will be appreciated by those skilled in the art, the initial frequency may be a maximum frequency of the range while the final frequency may be a minimum frequency of the range if the host low power clock frequency was set at a highest predefined value at the start. Similarly, the initial frequency may be a minimum frequency of the range while the final frequency may be a maximum frequency of the range if the host low power clock frequency was set at a lowest predefined value at the start.

Alternatively, the host low power clock frequency range may be determined based on the initial frequency of the host low power clock. Whenever the host-peripheral link works, the low power adjust module 503 may terminate the first function and compute the host low power clock frequency range by determining a maximum, a minimum, and a typical low power clock frequencies based on the initial frequency of the low power clock and one or more predetermined ratios. In one example, if the host low power clock frequency was set at a highest predefined value at the start, the low power adjust module 503 assigns and computes the host low power clock frequency range as follows:
Range maximum value = host low power clock frequency set or updated value in this function, where host-peripheral link works

$$\text{Range typical value = Range maximum value x predetermined typical to maximum guard ratio}$$

$$\text{Range minimum value = Range typical value x predetermined minimum to typical guard ratio}$$

Further, in one example, predetermined typical to maximum and minimum to typical guard ratios can be set to 2/3 and 2/3 respectively.

By way of another example, in the second function, the low power adjust module 503 assesses the quality of the low power link by checking whether the host-peripheral link works in the host low power clock frequency range computed in the first function. It should be noted that the low power adjust module 503 may perform the second function in those scenarios where the host low power clock frequency range was computed based on the initial frequency and the one or more ratios. For each of a set of frequencies selected from within the low power clock frequency range, this check involves the following steps: initiating a write command from the host device to write data on at least one register of the peripheral device, initiating a read command by the host device to read data from the at least one register of the peripheral device, and comparing the read data with the write data for a data parity.

The low power adjust module 503 sets the host low power clock frequency at a maximum or minimum value of the computed host low power clock frequency range. The low power adjust module 503 then initiates write into some or all of the peripheral registers using commands like generic long write or display command set (DCS) write. The write data used may be predetermined such as incremental data patterns. The low power adjust module 503 then initiates read into the same peripheral registers where writes were initiated using commands like generic long read or DCS read. These write and read commands may be initiated by the low power adjust module 503 through the CSI/DSI controller 506 and the D-PHYs 507 on the host device 501. The host device 501 then turns around the bus and waits for the requested read data from the peripheral device 502. If read data is received from the peripheral, it will be latched and compared with the predetermined write data patterns used. If the data matches i.e. if there is data parity, it is determined that the host-peripheral link is working with the set host low power clock frequency. The comparison and decision is taken in the low power adjust module 503. However, if read data is not received or if read data does not match with write data, the host 501 times out the bus turnaround time and determines that the host-peripheral link has failed. In the case that the host-peripheral link is working, this function iteratively rolls back to the frequency setting step and the low power adjust module 503 updates the host low power clock frequency to a lower value or a higher value than previously set.

The above iterative step is performed as long as the host-peripheral link is working and the computed range minimum or maximum value is not reached by the updated host low power clock frequency. If the host-peripheral link works until the updated host low power clock frequency reaches the computed range minimum or maximum value, it is declared that the check is passed and the low power adjust module 503 moves on to the third function i.e., allocation of a valid frequency to the host low power clock. However, if a host-peripheral link failure occurs at least once, this function will be terminated and the low power adjust module 503 rolls back to the first function, with the host low power clock frequency updated to a value where the host-peripheral link failure occurs.

By way of further example, in the third function, the low power adjust module 503 allocates a valid frequency to the host low power clock from within the host low power clock frequency range. Once the low power adjust module 503 checks and validates that the low power link is working in the entire range of the host low power clock frequencies computed in at least one of the first and second function, this function will allocate a valid frequency to the host low power clock from within the host low power clock frequency range. In one example, the host low power clock frequency is adjusted to a computed typical frequency of the low power clock frequency range.

It should be noted that the low power adjust module 503 and other such modules may be implemented in programmable hardware devices such as programmable gate arrays, programmable array logic, programmable logic devices, and so forth. Alternatively, the low power adjust module may be implemented in software for execution by various types of processors. An identified engine of executable code may, for instance, comprise one or more physical or logical blocks of computer instructions which may, for instance, be organized as an object, procedure, function, module, or other construct. Nevertheless, the executables of an identified engine need not be physically located together, but may comprise disparate instructions stored in different locations which, when joined logically together, comprise the engine and achieve the stated purpose of the engine. Indeed, an engine of executable code could be a single instruction, or many instructions, and may even be distributed over several different code segments, among different applications, and across several memory devices.

As will be appreciated by one skilled in the art, a variety of processes may be employed for dynamically adjusting a host low power clock frequency. In particular, a variety of processes may be employed for dynamically adjusting the host low power clock frequency upon detecting a coupling of a peripheral device to the host device and without depending on a peripheral low power clock frequency. For example, the exemplary system 500 and the associated low power adjust module 503 may dynamically adjust the host low power clock frequency by the processes discussed herein. In particular, as will be appreciated by those of ordinary skill in the art, control logic and/or automated routines for performing the techniques and steps described herein may be implemented by the system 500 and the associated low power adjust module 503, either by hardware, software, or combinations of hardware and software. For example, suitable code may be accessed and executed by the one or more processors on the system 500 to perform some or all of the techniques described herein. Similarly application specific integrated circuits (ASICs) configured to perform some or all of the processes described herein may be included in the one or more processors on the system 500.

For example, referring now to FIG. 9, exemplary control logic 900 for dynamically adjusting a host low power clock frequency via a system, such as system 500, is depicted via a flowchart in accordance with some embodiments of the present disclosure. As illustrated in the flowchart, the control logic 900 includes the steps of detecting the coupling of a peripheral device to a host device at step 901, determining a low power clock frequency range of the host device in which a low power link between the host device and a peripheral device is operational at step 902, and adjusting a low power clock frequency of the host device to a typical frequency of the low power clock frequency range at step 903.

In certain embodiments, the exemplary control logic 900 may further include the step of setting a control-data read clock of the host device to the low power clock of the host device. Further, in some embodiments, adjusting at step 903 comprises adjusting the low power clock frequency to the typical frequency of the low power clock frequency range for which a data parity occurred throughout the low power clock frequency range while assessing. In certain embodiments, the exemplary control logic 900 may further include the step of resetting a control-data read clock of the host device to a receive low power clock of the host device.

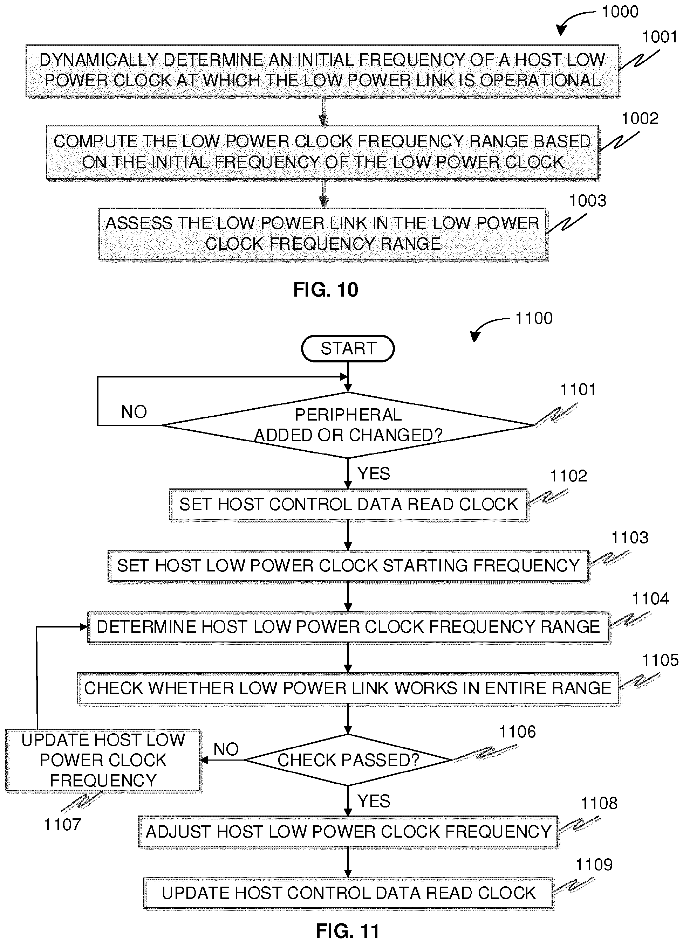

Further, a variety of processes may be employed for determining a host low power clock frequency range in which a host-peripheral low power link is operational at step 902. For example, referring now to FIG. 10, exemplary control logic 1000 for determining a host low power clock frequency range in which a host-peripheral low power link is operational is depicted via a flowchart in accordance with some embodiments of the present disclosure. As illustrated in the flowchart, the control logic 1000 includes the steps of dynamically determining an initial frequency of a low power clock of the host device at which the low power link between the host device and the peripheral device is operational at step 1001, computing the low power clock frequency range of the host device based on the initial frequency of the low power clock at step 1002, and assessing the low power link in the low power clock frequency range at step 1003.

In certain embodiments, dynamically determining at step 1001 may further include the steps of sweeping a plurality of frequencies of the low power clock of the host device, assessing the low power link at each of the plurality of frequencies, and determining the initial frequency of the low power clock based on the assessment. Further, in certain embodiments, sweeping the plurality of host low power clock frequencies comprises setting, at a first instance, the low power clock frequency to a pre-determined frequency and iteratively setting, at a subsequent instance, the low power clock frequency to an updated frequency. In certain embodiments, assessing the low power link at each of the plurality of frequencies may further include the steps of initiating a write command from the host device to write data on at least one register of the peripheral device, initiating a read command by the host device to read data from the at least one register of the peripheral device, and comparing the read data with the write data for a data parity. Further, in certain embodiments, determining the initial frequency of the low power clock comprises determining a frequency from the plurality of frequencies at which a data parity occurred while assessing.

Additionally, in certain embodiments, computing the low power clock frequency range at step 1002 comprises determining a maximum, a minimum, and a typical low power clock frequencies based on the initial frequency of the low power clock and one or more predetermined ratios. Moreover, in certain embodiments, assessing the low power link in the low power clock frequency range at step 1003 comprises assessing the low power link for each of a set of frequencies selected from within the low power clock frequency range by initiating a write command from the host device to write data on at least one register of the peripheral device, initiating a read command by the host device to read data from the at least one register of the peripheral device, and comparing the read data with the write data for a data parity.

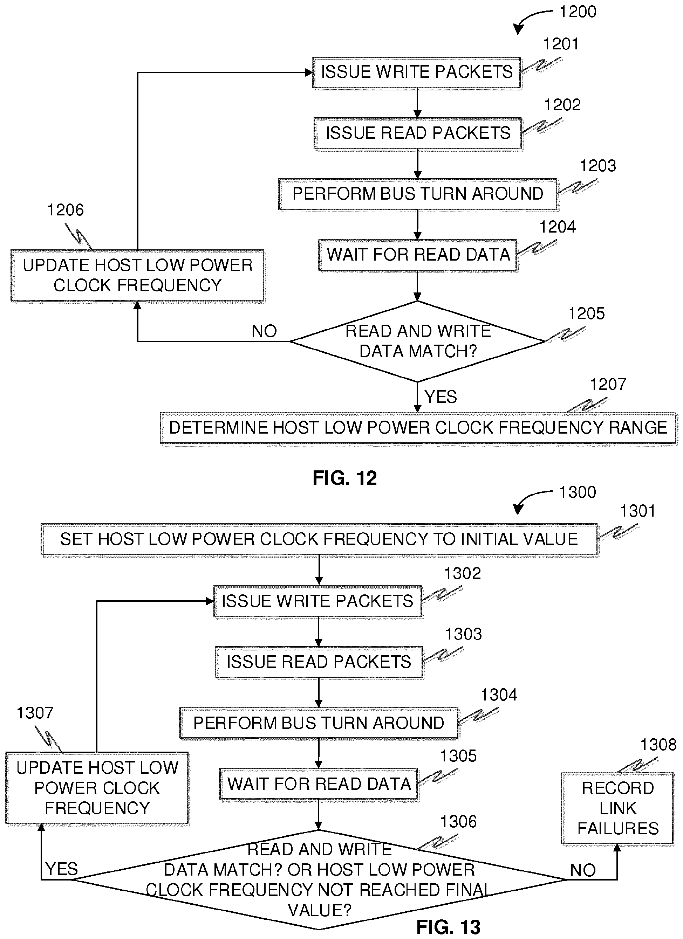

Referring now to FIG. 11, exemplary control logic 1100 for dynamically adjusting a host low power clock frequency is depicted via a flowchart in accordance with some embodiments of the present disclosure. The control logic 1100 depicts in greater detail the control logic 900 which employs the control logic 1000. As illustrated in the flowchart, the control logic 1100 includes the step of checking whether a new peripheral is added or existing peripheral is changed at step 1101. The control logic 1100 further includes the step of setting the host control-data read clock to the host low power clock at step 1102. The above step is performed in the DSI/CSI host controller control-data path described in FIG. 7 by an 'adjust enable' signal driven from the low power adjust module described in FIG. 8. The control logic 1100 further includes the step of setting the host low power clock starting frequency to a predetermined highest or lowest value allowed at step 1103. The above step is performed in the low power adjust module and will drive parameters to the clock parameter compute module described in FIG. 6. The control logic 1100 further includes the step of determining an initial host low power clock frequency at which the low power link between the host and the peripheral works and a corresponding minimum-typical-maximum range of such clock frequency at step 1104. The above step is performed in the low power adjust module by writing and reading control-data to and from the DSI/CSI Host controller control-data path and will be described in greater detail hereinbelow with respect to FIG. 12. The control logic 1100 further includes the step of assessing the host-peripheral low power link in the determined range i.e., checking whether the low power link between the host and the peripheral works in the determined range of minimum-maximum host low power clock frequency at step 1105. Again, the above step is performed in the low power adjust module by writing and reading control-data to and from the DSI/CSI Host controller control-data path and will be described in greater detail hereinbelow with respect to FIG. 13. The control logic 1100 further includes the step of checking at step 1106 whether the check at step 1105 is successful. The above step is performed in the low power adjust module. If the check at step 1106 fails, then the control logic 1100 includes the step of updating the host low power clock frequency to a lower or higher frequency than the frequency at which the link failure has occurred at step 1107. The frequency is updated to a lower value if the host low power clock starting frequency was set to the predetermined highest value and vice versa. The above step is performed in the low power adjust module and will drive parameters to the clock parameter compute module. The control logic then flows back to step 1104 and the process is iteratively repeated until the check at step 1106 is successful. If the check at step 1106 is successful, the control logic 1100 includes the step of adjusting the host low power clock frequency to a typical frequency of the host low power clock frequency range (determined in step 1104) at step 1108. The above step is performed in the low power adjust module and will drive parameters to the clock parameter compute module. Additionally, the control logic 1100 includes the step of updating or resetting the host control-data read clock to the host receive (Rx) low power clock at step 1109. The above step is performed in the DSI/CSI host controller control-data path by the 'adjust enable' signal driven from the low power adjust module.

Referring now to FIG. 12, exemplary control logic 1200 for determining the host low power clock frequency range at step 1104 is depicted in greater detail via a flowchart in accordance with some embodiments of the present disclosure. As illustrated in the flowchart, the control logic 1200 includes the step of issuing long or DCS write packets with predetermined data from the host to the peripheral at step 1201 and issuing long or DCS read packets from the host to the peripheral at step 1202. The above steps are performed by the low power adjust module by writing control-data and read requests data to the DSI/CSI host controller control-data path respectively. The control logic 1200 further includes the steps of performing bus turn around by the host at step 1203 by the DSI/CSI host controller and waiting until read data is received from the peripheral to the host or the bus turn around count times out in the host at step 1204 by the DSI/CSI host controller and the low power adjust module. The control logic 1200 further includes the step of checking at step 1205 whether read data received at step 1204 matches with write data sent at step 1201. If the check at step 1205 fails, then the control logic 1200 includes the step of updating the host low power clock frequency to a lower or higher frequency than previously set or updated frequency at step 1206. The above step is performed in the low power adjust module and will drive parameters to the clock parameter compute module. Additionally, if the check at step 1205 is successful, then the control logic 1200 includes the step of determining the host low power clock frequency range at step 1207. The above step involves assigning the set or updated host clock frequency at which the host and the peripheral low power link works as the initial frequency of the range. The final and typical frequency is determined based on the initial frequency and one or more predetermined ratios. For example, in one embodiment, the set or the updated host clock frequency at which the host and the peripheral low power link works is assigned as the maximum frequency of the range. The typical frequency is then calculated by multiplying the maximum frequency and the predetermined typical to maximum guard ratio. Similarly, the minimum frequency is calculated by multiplying the calculated typical frequency and the predetermined minimum to typical guard ratio. The above step is performed in the low power adjust module.

Referring now to FIG. 13, exemplary control logic 1300 for assessing the host-peripheral low power link in the host low power clock frequency range at step 1105 is depicted in greater detail via a flowchart in accordance with some embodiments of the present disclosure. As illustrated in the flowchart, the control logic 1300 includes the steps of setting the host low power clock starting frequency to an assigned maximum or minimum value at step 1301. The above step is performed in the low power adjust module and will drive parameters to the clock parameter compute module. The control logic 1300 further includes the steps of issuing long or DCS write packets with predetermined data from the host to the peripheral at step 1302 and issuing long or DCS read packets from the host to the peripheral at step 1303. The above steps are performed by the low power adjust module by writing control-data and read requests data to the DSI/CSI host controller control-data path respectively. The control logic 1300 further includes the steps of performing bus turn around by the host at step 1304 by the DSI/CSI host controller and waiting until read data is received from the peripheral to the host or the bus turn around count times out in the host at step 1305 by the DSI/CSI host controller and the low power adjust module. The control logic 1300 further includes the step of checking at step 1306 whether read data received at step 1305 matches with write data sent at step 1302 or whether the host low power clock frequency has not reached the calculated minimum or maximum value. If the check at step 1306 is successful, then the control logic 1300 includes the step of updating the host low power clock frequency to a lower or higher frequency than previously set or the updated frequency at step 1307. The above step is performed in the low power adjust module and will drive parameters to the clock parameter compute module. Additionally, if the check at step 1306 fails, then the control logic 1300 includes the step of recording any low power link failure between the host and the peripheral and also recording the host low power clock frequency set or updated at which the failure occurred at step 1308. The above step is performed in the low power adjust module.

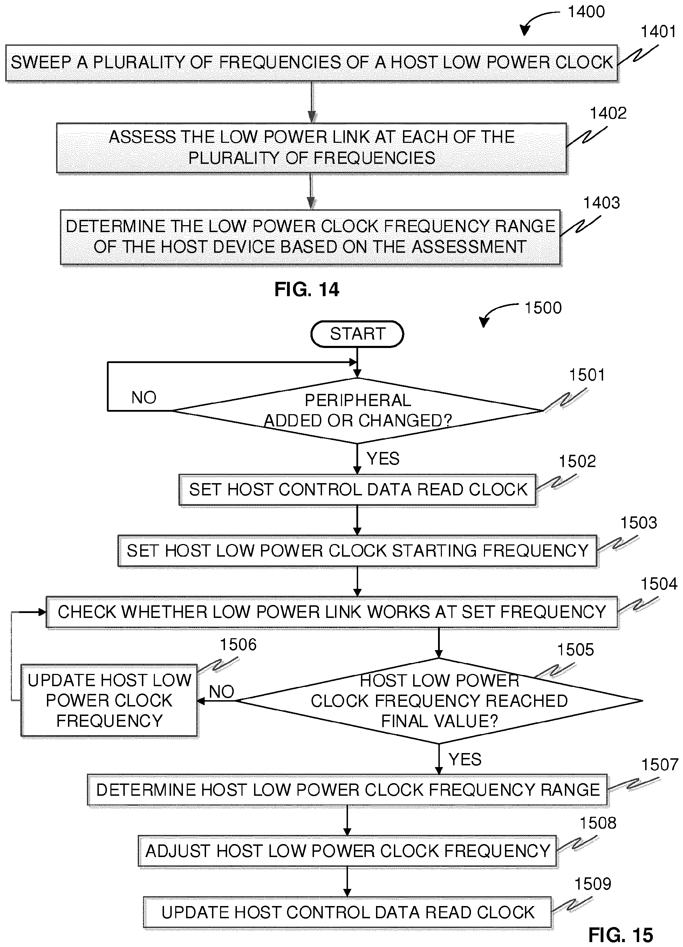

As stated above, a variety of processes may be employed for determining a host low power clock frequency range in which a host-peripheral low power link is operational at step 902. Referring now to FIG. 14, another exemplary control logic 1400 for determining a host low power clock frequency range in which a host-peripheral low power link is operational is depicted via a flowchart in accordance with some embodiments of the present disclosure. As illustrated in the flowchart, the control logic 1400 includes the steps of sweeping a plurality of frequencies of a host low power clock at step 1401, assessing the low power link between the host device and a peripheral device at each of the plurality of frequencies at step 1402, and determining the low power clock frequency range of the host device based on the assessment at step 1403.

As noted above, in certain embodiments, sweeping the plurality of host low power clock frequencies at step 1401 comprises setting, at a first instance, the low power clock frequency to a pre-determined frequency and iteratively setting, at a subsequent instance, the low power clock frequency to an updated frequency. Further, in certain embodiments, assessing the low power link at each of the plurality of frequencies at step 1402 may further include the steps of initiating a write command from the host device to write data on at least one register of the peripheral device, initiating a read command by the host device to read data from the at least one register of the peripheral device, and comparing the read data with the write data for a data parity. Further, in certain embodiments, determining the low power clock frequency range at step 1403 comprises determining the initial frequency and the final frequency within which the low power link was operational.

Referring now to FIG. 15, exemplary control logic 1500 for dynamically adjusting a host low power clock frequency is depicted via a flowchart in accordance with some embodiments of the present disclosure. The control logic 1500 depicts in greater detail the control logic 900 which employs the control logic 1400. As illustrated in the flowchart, the control logic 1500 includes the steps of checking whether a new peripheral is added or an existing peripheral is changed at step 1501, setting the host control-data read clock to the host low power clock at step 1502, setting the host low power clock starting frequency to a predetermined highest or lowest value allowed at step 1503, assessing the host-peripheral low power link at the set frequency i.e., checking whether low power link between the host and the peripheral works at the set frequency at step 1504, and checking whether the host low power clock frequency has reached a final value (lowest or highest depending on the starting frequency) at step 1505. If the check at step 1505 fails, then the control logic 1500 includes the step of updating the host low power clock frequency to a lower or higher frequency than the previously set frequency at step 1506. The control then flows back to step 1504 and the process is iteratively repeated until sweeping of a plurality of host low power clock frequencies. If the check at step 1505 is successful, then the control logic 1500 includes the steps of determining the host low power clock frequency range at step 1507, adjusting the host low power clock frequency to a typical frequency of the host low power clock frequency range at step 1508, and updating or resetting the host control-data read clock to the host receive (Rx) low power clock at step 1509.

As will be also appreciated, the above described techniques may take the form of computer or controller implemented processes and apparatuses for practicing those processes. The disclosure can also be embodied in the form of computer program code containing instructions embodied in tangible media, such as floppy diskettes, CD-ROMs, hard drives, or any other computer-readable storage medium, wherein, when the computer program code is loaded into and executed by a computer or controller, the computer becomes an apparatus for practicing the invention. The disclosure may also be embodied in the form of computer program code or signal, for example, whether stored in a storage medium, loaded into and/or executed by a computer or controller, or transmitted over some transmission medium, such as over electrical wiring or cabling, through fiber optics, or via electromagnetic radiation, wherein, when the computer program code is loaded into and executed by a computer, the computer becomes an apparatus for practicing the invention. When implemented on a general-purpose microprocessor, the computer program code segments configure the microprocessor to create specific logic circuits.

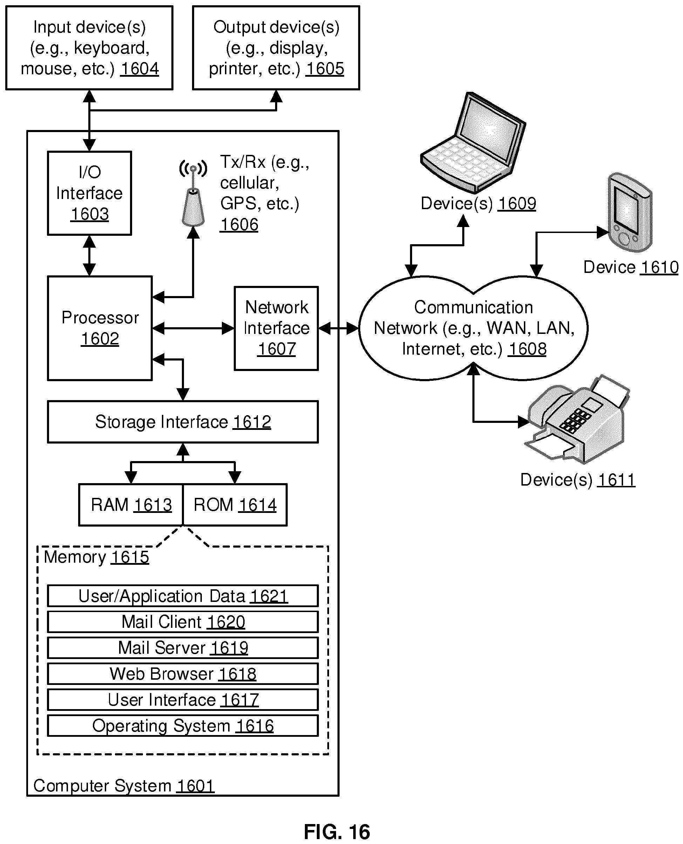

Referring now to FIG. 16, a block diagram of an exemplary computer system 1601 for implementing embodiments consistent with the present disclosure is illustrated. Variations of computer system 1601 may be used for implementing a mobile device or a computing device comprising a host and at least one peripheral wherein techniques for dynamically adjusting the host low power clock frequency upon detecting a coupling of a peripheral device to the host device and without depending on a peripheral low power clock frequency may be practiced. Computer system 1601 may comprise a central processing unit ("CPU" or "processor") 1602. Processor 1602 may comprise at least one data processor for executing program components for executing user- or system-generated requests. A user may include a person, a person using a device such as such as those included in this disclosure, or such a device itself. The processor may include specialized processing units such as integrated system (bus) controllers, memory management control units, floating point units, graphics processing units, digital signal processing units, etc. The processor may include a microprocessor, such as AMD Athlon, Duron or Opteron, ARM's application, embedded or secure processors, IBM PowerPC, Intel's Core, Itanium, Xeon, Celeron or other line of processors, etc. The processor 1602 may be implemented using mainframe, distributed processor, multi-core, parallel, grid, or other architectures. Some embodiments may utilize embedded technologies like application-specific integrated circuits (ASICs), digital signal processors (DSPs), Field Programmable Gate Arrays (FPGAs), etc.

Processor 1602 may be disposed in communication with one or more input/output (I/O) devices via I/O interface 1603. The I/O interface 1603 may employ communication protocols/methods such as, without limitation, audio, analog, digital, monaural, RCA, stereo, IEEE-1394, serial bus, universal serial bus (USB), infrared, PS/2, BNC, coaxial, component, composite, digital visual interface (DVI), high-definition multimedia interface (HDMI), RF antennas, S-Video, VGA, IEEE 802.n /b/g/n/x, Bluetooth, cellular (e.g., code-division multiple access (CDMA), high-speed packet access (HSPA+), global system for mobile communications (GSM), long-term evolution (LTE), WiMax, or the like), etc.

Using the I/O interface 1603, the computer system 1601 may communicate with one or more I/O devices. For example, the input device 1604 may be an antenna, keyboard, mouse, joystick, (infrared) remote control, camera, card reader, fax machine, dongle, biometric reader, microphone, touch screen, touchpad, trackball, sensor (e.g., accelerometer, light sensor, GPS, gyroscope, proximity sensor, or the like), stylus, scanner, storage device, transceiver, video device/source, visors, etc. Output device 1605 may be a printer, fax machine, video display (e.g., cathode ray tube (CRT), liquid crystal display (LCD), light-emitting diode (LED), plasma, or the like), audio speaker, etc. In some embodiments, a transceiver 1606 may be disposed in connection with the processor 1602. The transceiver may facilitate various types of wireless transmission or reception. For example, the transceiver may include an antenna operatively connected to a transceiver chip (e.g., Texas Instruments WiLink WL1283, Broadcom BCM4750IUB8, Infineon Technologies X-Gold 618-PMB9800, or the like), providing IEEE 802.11a/b/g/n, Bluetooth, FM, global positioning system (GPS), 2G/3G HSDPA/HSUPA communications, etc.

In some embodiments, the processor 1602 may be disposed in communication with a communication network 1608 via a network interface 1607. The network interface 1607 may communicate with the communication network 1608. The network interface may employ connection protocols including, without limitation, direct connect, Ethernet (e.g., twisted pair 10/100/1000 Base T), transmission control protocol/internet protocol (TCP/IP), token ring, IEEE 802.11a/b/g/n/x, etc. The communication network 1608 may include, without limitation, a direct interconnection, local area network (LAN), wide area network (WAN), wireless network (e.g., using Wireless Application Protocol), the Internet, etc. Using the network interface 1607 and the communication network 1608, the computer system 1601 may communicate with devices 1610, 1611, and 1612. These devices may include, without limitation, personal computer(s), server(s), fax machines, printers, scanners, various mobile devices such as cellular telephones, smartphones (e.g., Apple iPhone, Blackberry, Android-based phones, etc.), tablet computers, eBook readers (Amazon Kindle, Nook, etc.), laptop computers, notebooks, gaming consoles (Microsoft Xbox, Nintendo DS, Sony PlayStation, etc.), or the like. In some embodiments, the computer system 1601 may itself embody one or more of these devices.

In some embodiments, the processor 1602 may be disposed in communication with one or more memory devices (e.g., RAM 1613, ROM 1614, etc.) via a storage interface 1612. The storage interface may connect to memory devices including, without limitation, memory drives, removable disc drives, etc., employing connection protocols such as serial advanced technology attachment (SATA), integrated drive electronics (IDE), IEEE-1394, universal serial bus (USB), fiber channel, small computer systems interface (SCSI), etc. The memory drives may further include a drum, magnetic disc drive, magnetooptical drive, optical drive, redundant array of independent discs (RAID), solid-state memory devices, solid-state drives, etc.

The memory devices may store a collection of program or database components, including, without limitation, an operating system 1616, user interface application 1617, web browser 1618, mail server 1619, mail client 1620, user/application data 1621 (e.g., any data variables or data records discussed in this disclosure), etc. The operating system 1616 may facilitate resource management and operation of the computer system 1601. Examples of operating systems include, without limitation, Apple Macintosh OS X, Unix, Unix-like system distributions (e.g., Berkeley Software Distribution (BSD), FreeBSD, NetBSD, OpenBSD, etc.), Linux distributions (e.g., Red Hat, Ubuntu, Kubuntu, etc.), IBM OS/2, Microsoft Windows (XP, Vista/7/8, etc.), Apple iOS, Google Android, Blackberry OS, or the like. User interface 1617 may facilitate display, execution, interaction, manipulation, or operation of program components through textual or graphical facilities. For example, user interfaces may provide computer interaction interface elements on a display system operatively connected to the computer system 1601, such as cursors, icons, check boxes, menus, scrollers, windows, widgets, etc. Graphical user interfaces (GUIs) may be employed, including, without limitation, Apple Macintosh operating systems' Aqua, IBM OS/2, Microsoft Windows (e.g., Aero, Metro, etc.), Unix X-Windows, web interface libraries (e.g., ActiveX, Java, JavaScript, AJAX, HTML, Adobe Flash, etc.), or the like.

In some embodiments, the computer system 1601 may implement a web browser 1618 stored program component. The web browser may be a hypertext viewing application, such as Microsoft Internet Explorer, Google Chrome, Mozilla Firefox, Apple Safari, etc. Secure web browsing may be provided using HTTPS (secure hypertext transport protocol), secure sockets layer (SSL), Transport Layer Security (TLS), etc. Web browsers may utilize facilities such as AJAX, DHTML, Adobe Flash, JavaScript, Java, application programming interfaces (APIs), etc. In some embodiments, the computer system 1601 may implement a mail server 1619 stored program component. The mail server may be an Internet mail server such as Microsoft Exchange, or the like. The mail server may utilize facilities such as ASP, ActiveX, ANSI C++/C#, Microsoft .NET, CGI scripts, Java, JavaScript, PERL, PHP, Python, WebObjects, etc. The mail server may utilize communication protocols such as internet message access protocol (IMAP), messaging application programming interface (MAPI), Microsoft Exchange, post office protocol (POP), simple mail transfer protocol (SMTP), or the like. In some embodiments, the computer system 1601 may implement a mail client 1620 stored program component. The mail client may be a mail viewing application, such as Apple Mail, Microsoft Entourage, Microsoft Outlook, Mozilla Thunderbird, etc.

In some embodiments, computer system 1601 may store user/application data 1621, such as the data, variables, records, etc. (e.g., maximum frequency of host low power clock, a maximum-typical-minimum frequency of the range of the host low power clock frequency, pre-determined write data pattern, and so forth) as described in this disclosure. Such databases may be implemented as fault-tolerant, relational, scalable, secure databases such as Oracle or Sybase. Alternatively, such databases may be implemented using standardized data structures, such as an array, hash, linked list, struct, structured text file (e.g., XML), table, or as object-oriented databases (e.g., using ObjectStore, Poet, Zope, etc.). Such databases may be consolidated or distributed, sometimes among the various computer systems discussed above in this disclosure. It is to be understood that the structure and operation of the any computer or database component may be combined, consolidated, or distributed in any working combination.

As will be appreciated by those skilled in the art, the techniques described in the various embodiments discussed above results in automatic adjustment of the host low power clock frequency, without depending on the peripheral low power clock frequency, in a dynamic manner, whenever a new peripheral is coupled to a host or an existing peripheral connected to the host is changed. Even knowledge of the peripheral low power clock frequency is not required for adjustment of the host low power clock frequency. Further, embodiments of the system and method may achieve a faster and error-free way of adjusting the host low power clock frequency. As will be appreciated by those skilled in the art, the disclosed system and method for automated adjustment of the host low power clock frequency within the predetermined range of that of the peripheral clock frequency in a dynamic manner may result in the elimination of link failures between the mobile host processor and its peripheral devices. These advantages may be achieved by dynamically adjusting the host low power clock frequency by real-time determination of a valid range in which the link continues to work during sweeping of the host low power clock frequencies and subsequent allocation of a valid frequency to the host low power clock from within the determined range.

The specification has described a system and method for dynamically adjusting a low power clock frequency of a host device. The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

**Claims**

1. A method for dynamically adjusting a low power clock frequency of a host device (501) coupled with a peripheral device (502), wherein both of the host device and the peripheral device are a part of a mobile industry processor interface, MIPI, circuitry, the method comprising:

   sweeping (1401) multiple frequencies of a low power clock of the host device;
   assessing (1402) whether a link configured to operate under a low-power mode between the host device and the peripheral device is operational at each of the multiple frequencies of the low power clock of the host device, wherein the assessment comprises:

   writing (1201) (1402) data on at least one register of the peripheral device in the low power clock domain of the host device,
   reading (1202) (1402) data from the at least one register of the peripheral device in the low power clock domain of the host device, and
   comparing (1205) the read data with the write data for a data parity to determine whether the link is operational;

   computing (1403), (1507) a low power clock frequency range of the host device based on one or more frequencies of the multiple frequencies at which the link is assessed to be operational; and
   setting (1508) the low power clock frequency to a typical frequency based on a maximum value of the low power clock frequency range and a predetermined guard ratio between the typical frequency and the maximum value of the low power clock frequency.

2. The method of claim 1, further comprising detecting a coupling of the peripheral device to the host device.

3. The method of claim 1 or 2, further comprising setting a clock domain for reading of the control-data by the host device to the low power clock domain of the host device.

4. The method of claim 1, wherein sweeping comprises setting, at a first instance, the low power clock frequency to a pre-determined frequency and iteratively setting, at a subsequent instance, the low power clock frequency to an updated frequency.

5. The method of claim 4, wherein determining the initial frequency of the low power clock comprises determining a frequency from the plurality of frequencies at which a data parity occurred while assessing.

6. The method of any preceding claim, wherein adjusting comprises adjusting the low power clock frequency to the typical frequency of the low power clock frequency range for which a data parity occurred throughout the low power clock frequency range while assessing.

7. The method of any preceding claim, further comprising setting a clock domain for reading of the control-data by the host device to a receive low power clock of the host device.

**8.** A system, comprising:
a circuitry (503) configured to dynamically adjust a low power clock frequency of a host device by performing operations comprising the method of any preceding claim.

**9.** The system of claim 8, wherein the system comprises a mobile device, the circuitry comprises a mobile industry processor interface MIPI, circuitry; the host device comprises a MIPI host device (501), and the peripheral device comprises a MIPI peripheral device (502).

**10.** A non-transitory computer-readable medium storing processor-executable instructions which, when executed by a processor, cause the processor to perform the method of any of claims 1 - 7.


**Patentansprüche**

**1.** Verfahren zum dynamischen Einstellen einer Niederleistungs-Taktfrequenz eines Host-Geräts (501), das mit einem Peripheriegerät (502) verbunden wird, wobei sowohl das Host-Gerät als auch das Peripheriegerät ein Teil einer mobilen Industrieprozessor-Schnittstellenschaltung, MIPI, sind, wobei das Verfahren umfasst:

ein Durchsuchen (1401) von Mehrfachfrequenzen eines Niederleistungstakts des Host-Geräts;
ein Beurteilen (1402), ob eine Verbindung, die konfiguriert wird, unter einem Niederleistungsmodus zwischen dem Host-Gerät und dem Peripheriegerät zu arbeiten, bei jeder der Mehrfachfrequenzen des Niederleistungstakts des Host-Geräts betriebsfähig ist, wobei das Beurteilen umfasst:

ein Schreiben (1201) (1402) von Daten auf mindestens ein Register des Peripheriegeräts in dem Niederleistungs-Taktbereich des Host-Geräts, Lesen (1202) (1402) von Daten aus dem mindestens einen Register des Peripheriegeräts in dem Niederleistungs-Taktbereich des Host-Geräts, und
ein Vergleichen (1205) der Lesedaten mit den Schreibdaten für eine Datenparität, um zu bestimmen, ob die Verbindung betriebsfähig ist;
ein Berechnen (1403), (1507) eines Niederleistungs-Taktfrequenzbereichs des Host-Geräts auf Grundlage einer oder mehrerer Frequenzen der Mehrfachfrequenzen, bei denen die Verbindung beurteilt wird, betriebsfähig zu sein; und
ein Einstellen (1508) der Niederleistungs-Taktfrequenz auf eine typische Frequenz auf Grundlage eines Höchstwerts des Niederleistungs-Taktfrequenzbereichs und eines vorbestimmten Schutzverhältnisses zwischen der typischen Frequenz und dem Höchstwert der Niederleistungs-Taktfrequenz.

**2.** Verfahren nach Anspruch 1, das des Weiteren ein Erfassen einer Kopplung des Peripheriegeräts mit dem Host-Gerät umfasst.

**3.** Verfahren nach Anspruch 1 oder 2, das des Weiteren ein Einstellen eines Taktbereichs zum Lesen der Steuerdaten durch das Host-Gerät für den Niederleistungs-Taktbereich des Host-Geräts umfasst.

**4.** Verfahren nach Anspruch 1, wobei ein Durchsuchen ein Einstellen der Niederleistungs-Taktfrequenz auf eine vorbestimmte Frequenz in einer ersten Instanz und ein iteratives Einstellen der Niederleistungs-Taktfrequenz auf eine aktualisierte Frequenz in einer nachfolgenden Instanz umfasst.

**5.** Verfahren nach Anspruch 4, wobei ein Bestimmen der Anfangsfrequenz des Niederleistungstakts ein Bestimmen einer Frequenz aus der Vielzahl von Frequenzen umfasst, bei der eine Datenparität beim Beurteilen aufgetreten ist.

**6.** Verfahren nach einem vorhergehenden Anspruch, wobei ein Einstellen das Einstellen der Niederleistungs-Taktfrequenz auf die typische Frequenz des Niederleistungs-Taktfrequenzbereichs umfasst, für den eine Datenparität durch den Niederleistungs-Taktfrequenzbereich beim Beurteilen aufgetreten ist.

**7.** Verfahren nach einem vorhergehenden Anspruch, das des Weiteren ein Einstellen eines Taktbereichs zum Lesen der Steuerdaten durch das Host-Gerät umfasst, um einen Niederleistungstakt des Host-Geräts zu empfangen.

**8.** System, das umfasst:
eine Schaltung (503), die konfiguriert wird, eine Niederleistungs-Taktfrequenz eines Host-Geräts durch Ausführen von Abläufen dynamisch einzustellen, die das Verfahren nach einem vorhergehenden Anspruch umfassen.

**9.** System nach Anspruch 8, wobei das System ein Mobilgerät umfasst, die Schaltung eine mobile Industrieprozessor-Schnittstellenschaltung, MIPI, umfasst; das Host-Gerät ein MIPI-Host-Gerät (501) umfasst und das Peripheriegerät ein MIPI-Peripheriegerät (502) umfasst.

**10.** Nichtflüchtiger computerlesbarer Datenträger, der prozessorausführbare Anweisungen speichert, die den Prozessor veranlassen, das Verfahren nach einem der Ansprüche 1 bis 7 auszuführen, wenn sie durch einen Prozessor ausgeführt werden.

**Revendications**

**1.** Procédé permettant d'ajuster dynamiquement une fréquence d'horloge à faible puissance d'un dispositif hôte (501) couplé à un dispositif périphérique (502), ledit dispositif hôte et ledit dispositif périphérique faisant partie d'un ensemble de circuits d'interface de processeur d'industrie mobile (MIPI), ledit procédé comprenant :

le balayage (1401) de fréquences multiples d'une horloge à faible puissance du dispositif hôte ;
l'évaluation (1402) pour savoir si un lien configuré pour fonctionner sous un mode de faible puissance entre le dispositif hôte et le dispositif périphérique est prêt à fonctionner à chaque fréquence des fréquences multiples de l'horloge à faible puissance du dispositif hôte, ladite évaluation comprenant :

l'écriture (1201) (1402) des données sur au moins un registre du dispositif périphérique dans le domaine de horloge à faible puissance du dispositif hôte, la lecture (1202) (1402) des données provenant du au moins registre du dispositif périphérique dans le domaine d'horloge à faible puissance du dispositif hôte, et la comparaison (1205) des données de lecture avec les données d'écriture pour une parité de données afin de déterminer si le lien est prêt à fonctionner ; le calcul (1403), (1507) d'une plage de fréquence d'horloge à faible puissance du dispositif hôte sur la base d'une ou de plusieurs fréquences des fréquences multiples auxquelles le lien est évalué comme étant prêt à fonctionner; et
le réglage (1508) de la fréquence d'horloge à faible puissance à une fréquence typique sur la base d'une valeur maximale de la plage de fréquences d'horloge à faible puissance et un rapport de garde prédéfini entre la fréquence typique et la valeur maximale de la fréquence d'horloge à faible puissance.

**2.** Procédé selon la revendication 1, comprenant en outre la détection d'un couplage du dispositif périphérique au dispositif hôte.

**3.** Procédé selon la revendication 1 ou 2, comprenant en outre le réglage d'un domaine d'horloge pour la lecture des données de commande du dispositif hôte au domaine d'horloge à faible puissance du dispositif hôte.

**4.** Procédé selon la revendication 1, ledit balayage comprenant le réglage, au niveau d'une première instance, de la fréquence d'horloge à faible puissance à une fréquence prédéfinie et le réglage de manière itérative, au niveau d'une instance ultérieure, de la fréquence d'horloge à faible puissance à une fréquence mise à jour.

**5.** Procédé selon la revendication 4, ladite détermination de
la fréquence initiale de l'horloge à faible puissance comprenant la détermination d'une fréquence parmi la pluralité de fréquences à laquelle une parité de données s'est produite pendant l'évaluation.

**6.** Procédé selon l'une quelconque des revendications précédentes, ledit ajustement comprenant l'ajustement de la fréquence d'horloge à faible puissance à la fréquence typique de la plage de fréquences d'horloge à faible puissance pour laquelle une parité de données s'est produite à travers la plage de fréquences d'horloge à faible puissance pendant l'évaluation.

**7.** Procédé selon l'une quelconque des revendications précédentes, comprenant en outre le réglage d'un domaine d'horloge pour la lecture des données de commande par le dispositif hôte à une horloge à faible puissance de réception du dispositif hôte.

**8.** Système comprenant :

un ensemble de circuits (503) conçu pour ajuster dynamiquement une fréquence d'horloge à faible puissance d'un dispositif hôte en effectuant des opérations comprenant le procédé selon l'une quelconque des revendications précédentes.

9. Système selon la revendication 8, ledit système comprenant un dispositif mobile, ledit ensemble de circuits comprenant un ensemble de circuits d'interface de processeur d'industrie mobile (MIPI) ; ledit dispositif hôte comprenant un dispositif hôte MIPI (501) et ledit dispositif périphérique comprenant un dispositif périphérique MIPI (502).

10. Support lisible par ordinateur non transitoire stockant des instructions exécutables par un processeur qui, lorsqu'elles sont exécutées par un processeur, amènent le processeur à effectuer le procédé selon l'une quelconque des revendications 1 à 7.

**FIG. 1**

**FIG. 2**

**FIG. 3**

EP 3 073 349 B1

EP 3 073 349 B1

**FIG. 4**

**FIG. 5**

**FIG. 6**

504

Clock param compute

- PLL Mult/div ratios
- Clock Divider ratios
- Clock mux selects

Parameters to "Clock controller" module

Host Low power clock set frequency from "Low power adjust module"

**FIG. 7**

Low power data interface to DPHY

Write data path

Read data path

Mux

Host Rx low power clock

Host low power clock

adjustment enable

Host low power clock

MUX/DEMUX

DBI Bus

Read/Write bus from "Low power adjust" module

adjustment enable

**FIG. 8**

DETECT COUPLING OF A PERIPHERAL DEVICE TO A HOST DEVICE — 901

DETERMINE A LOW POWER CLOCK FREQUENCY RANGE OF THE HOST DEVICE IN WHICH A LOW POWER LINK BETWEEN THE HOST DEVICE AND THE PERIPHERAL DEVICE IS OPERATIONAL — 902

ADJUST A LOW POWER CLOCK FREQUENCY OF THE HOST DEVICE TO A TYPICAL FREQUENCY OF THE LOW POWER CLOCK FREQUENCY RANGE — 903

**FIG. 9**

EP 3 073 349 B1

1000

1001
DYNAMICALLY DETERMINE AN INITIAL FREQUENCY OF A HOST LOW POWER CLOCK AT WHICH THE LOW POWER LINK IS OPERATIONAL

1002
COMPUTE THE LOW POWER CLOCK FREQUENCY RANGE BASED ON THE INITIAL FREQUENCY OF THE LOW POWER CLOCK

1003
ASSESS THE LOW POWER LINK IN THE LOW POWER CLOCK FREQUENCY RANGE

**FIG. 10**

1100

START

1101
NO ── PERIPHERAL ADDED OR CHANGED?

YES

1102
SET HOST CONTROL DATA READ CLOCK

1103
SET HOST LOW POWER CLOCK STARTING FREQUENCY

1104
DETERMINE HOST LOW POWER CLOCK FREQUENCY RANGE

1105
CHECK WHETHER LOW POWER LINK WORKS IN ENTIRE RANGE

1106
CHECK PASSED?

UPDATE HOST LOW POWER CLOCK FREQUENCY

NO

1107

YES

1108
ADJUST HOST LOW POWER CLOCK FREQUENCY

1109
UPDATE HOST CONTROL DATA READ CLOCK

**FIG. 11**

1200

1201
ISSUE WRITE PACKETS

1202
ISSUE READ PACKETS

1203
PERFORM BUS TURN AROUND

1204
WAIT FOR READ DATA

1206
UPDATE HOST LOW POWER
CLOCK FREQUENCY

1205
NO ← READ AND WRITE
DATA MATCH?

YES

1207
DETERMINE HOST LOW POWER CLOCK FREQUENCY RANGE

**FIG. 12**

1300

1301
SET HOST LOW POWER CLOCK FREQUENCY TO INITIAL VALUE

1302
ISSUE WRITE PACKETS

1303
ISSUE READ PACKETS

1304
PERFORM BUS TURN AROUND

1307
UPDATE HOST LOW
POWER CLOCK
FREQUENCY

1305
WAIT FOR READ DATA

1308
RECORD
LINK
FAILURES

1306
YES ← READ AND WRITE
DATA MATCH? OR HOST LOW POWER
CLOCK FREQUENCY NOT REACHED FINAL
VALUE? → NO

**FIG. 13**

1400

SWEEP A PLURALITY OF FREQUENCIES OF A HOST LOW POWER CLOCK ⟋ 1401

ASSESS THE LOW POWER LINK AT EACH OF THE PLURALITY OF FREQUENCIES ⟋ 1402

DETERMINE THE LOW POWER CLOCK FREQUENCY RANGE OF THE HOST DEVICE BASED ON THE ASSESSMENT ⟋ 1403

**FIG. 14**

1500

START

NO ◀ PERIPHERAL ADDED OR CHANGED? 1501

YES

SET HOST CONTROL DATA READ CLOCK 1502

SET HOST LOW POWER CLOCK STARTING FREQUENCY 1503

CHECK WHETHER LOW POWER LINK WORKS AT SET FREQUENCY 1504

UPDATE HOST LOW POWER CLOCK FREQUENCY 1506 ◀ NO ◀ HOST LOW POWER CLOCK FREQUENCY REACHED FINAL VALUE? 1505

YES

DETERMINE HOST LOW POWER CLOCK FREQUENCY RANGE 1507

ADJUST HOST LOW POWER CLOCK FREQUENCY 1508

UPDATE HOST CONTROL DATA READ CLOCK 1509

**FIG. 15**

**FIG. 16**

**EP 3 073 349 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20100169699 A